# EUROPEAN PATENT APPLICATION

(11) **EP 4 274 274 A1**
(43) Date of publication of application: **08.11.2023**
(21) Application number: 22745160.6
(22) Date of filing: 21.01.2022
(51) Int. Cl.: H04W 4/48

(54) **METHOD AND APPARATUS FOR FUNCTION ASSISTANCE FOR VEHICLE-MOUNTED TERMINAL**

(30) Priority: 01.02.2021 CN 202110138240
(71) Applicant: Huawei Technologies Co., Ltd., Shenzhen, Guangdong 518129 (CN)
(72) Inventor: DAN, Jinguo, Shenzhen, Guangdong 518129 (CN); WANG, Yongjian, Shenzhen, Guangdong 518129 (CN)
(74) Representative: MERH-IP Matias Erny Reichl Hoffmann Patentanwälte PartG mbB
(86) International application number: PCT/CN2022/073241
(87) International publication number: WO 2022/161285

(57) **Abstract**

Embodiments of this application disclose a method and apparatus for performing function assistance on a vehicle-mounted terminal, and belong to the field of vehicle-to-everything technologies. The method includes the following: A mobile terminal establishes a communication connection to a vehicle-mounted terminal, and the mobile terminal receives an upgrade message that corresponds to a program and that is sent by a server. The mobile terminal displays an upgrade option corresponding to the program. When detecting that the upgrade option is triggered, the mobile terminal sends, to the server, an upgrade package obtaining request corresponding to the program. The server sends an upgrade package of the program to the mobile terminal. The mobile terminal sends the upgrade package to the vehicle-mounted terminal. The vehicle-mounted terminal receives the upgrade package, and upgrades the foregoing program based on the upgrade package. According to this application, an upgrade manner of a program in a vehicle may not be limited to the vehicle-mounted terminal, so that the program in the vehicle can be upgraded more flexibly, and user experience is better.

## Description

This application claims priority to Chinese Patent Application No. 202110138240.8, filed on February 1, 2021 and entitled "METHOD AND APPARATUS FOR PERFORMING FUNCTION ASSISTANCE ON VEHICLE-MOUNTED TERMINAL", which is incorporated herein by reference in its entirety.

### TECHNICAL FIELD

This application relates to the field of vehicle-to-everything technologies, and in particular, to a method and an apparatus for performing function assistance on a vehicle-mounted terminal.

### BACKGROUND

Currently, interaction between a connected vehicle and a server is mostly implemented by using a telematics box (Telematics Box, T-Box).

For upgrade of firmware and an application in the connected vehicle, in most cases, the T-Box interacts with the server to obtain an upgrade package of the firmware or the application, and then upgrades the firmware or the application.

Currently, firmware and an application in a connected vehicle can be upgraded only by using the T-Box. A user has a single choice, and flexibility in upgrading the firmware and the application is poor.

### SUMMARY

Embodiments of this application provide a method and apparatus for performing function assistance on a vehicle-mounted terminal, to resolve a problem of poor flexibility in upgrading a program in a connected vehicle. The technical solution is as follows:

According to a first aspect, a method for performing function assistance on a vehicle-mounted terminal is provided. The method includes the following: A mobile terminal establishes a communication connection to a vehicle-mounted terminal, and the mobile terminal receives an upgrade message that corresponds to a program and that is sent by a server. The mobile terminal displays an upgrade option corresponding to the program. When it is detected that the upgrade option is triggered, the mobile terminal sends an upgrade package obtaining request corresponding to the program to the server. The server sends the upgrade package of the program to the mobile terminal. The mobile terminal sends the upgrade package to the vehicle-mounted terminal. The vehicle-mounted terminal receives the upgrade package, and upgrades the foregoing program based on the upgrade package.

In the solution shown in embodiments of this application, the communication connection may be a Wi-Fi connection, a Bluetooth connection, or the like. The program may be firmware, an application, or the like. The firmware may be firmware of a chassis control system of the vehicle-mounted terminal, firmware of an HMI, or the like. The application may be a high-definition map application or the like.

According to the foregoing solution, a user may choose to tap the upgrade option on a proper occasion, to trigger the mobile terminal to send, to the server, the upgrade package obtaining request corresponding to the program. After receiving the upgrade package obtaining request, the server returns the upgrade package of the program to the mobile terminal. It can be learned that, in this solution, an occasion for downloading the upgrade package may be determined by the user. For example, when the user is at home and there is a wireless network, the user may tap the upgrade option. In this way, mobile data traffic can be saved. When the user is in a vehicle, the downloaded upgrade package is sent to the vehicle-mounted terminal through a communication connection between the mobile terminal and the vehicle-mounted terminal. In this way, an upgrade solution that can be selected by the user is not limited to a vehicle-mounted terminal, so that a program in a vehicle is upgraded more flexibly, and user experience is better.

In a possible implementation, the upgrade message carries a latest version identifier of the program. Before the mobile terminal displays an upgrade option corresponding to the program, the method further includes: The mobile terminal sends an installed version identifier obtaining request corresponding to the program to the vehicle-mounted terminal, and receives an installed version identifier of the program sent by the vehicle-mounted terminal. If the installed version identifier is different from the latest version identifier, the upgrade option corresponding to the program is displayed.

In the solution shown in this embodiment of this application, determining whether a target application needs to be upgraded may be implemented by the mobile terminal. The server may send an upgrade message corresponding to a program to the mobile terminal corresponding to the vehicle-mounted terminal on which the program is installed, provided that the server obtains the upgrade package of the program. The upgrade message carries the latest version identifier. After receiving the upgrade message, the mobile terminal may obtain the installed version identifier of the program from the vehicle-mounted terminal. If the latest version identifier and the installed version identifier are different, it indicates that the program installed on the vehicle-mounted terminal is not of a latest version, and needs to be upgraded. In this case, the mobile terminal may display the upgrade option corresponding to the program, so that the user taps the upgrade option on a proper occasion, to obtain the upgrade package from the server.

In a possible implementation, the program is firmware of the vehicle-mounted terminal.

In the solution shown in this embodiment of this application, the firmware may include firmware of an HMI, firmware of an ADS, firmware of a chassis control system, or the like in the mobile terminal.

In a possible implementation, the program is a map application of the vehicle-mounted terminal.

In a possible implementation, the method further includes: A plurality of vehicle control options are displayed on the mobile terminal; and when detecting that a target vehicle control option in the plurality of vehicle control options is triggered, the mobile terminal determines a vehicle control instruction corresponding to the target vehicle control option, and sends the vehicle control instruction to the vehicle-mounted terminal.

In the solution shown in this embodiment of this application, the mobile terminal may further assist the vehicle-mounted terminal in controlling a vehicle. Specifically, the user may trigger, by tapping a vehicle control option displayed on the mobile terminal, the mobile terminal to send a vehicle control message to the vehicle-mounted terminal.

In a possible implementation, the target vehicle control option is a braking function option, and the vehicle control instruction is a braking instruction.

In the solution shown in this embodiment of this application, when a display interface of the vehicle-mounted terminal is faulty, the user cannot control the vehicle by using the vehicle-mounted terminal. In this case, the user may trigger, by tapping the braking function option in the mobile terminal, the mobile terminal to send a corresponding braking instruction to the vehicle-mounted terminal. Further, the mobile terminal may send a braking command to the chassis control system according to the braking instruction, to achieve a braking objective.

In a possible implementation, the target vehicle control option is a vehicle diagnosis function option, and the vehicle control instruction is a vehicle diagnosis instruction. The method further includes: receiving a vehicle diagnosis result message sent by the vehicle-mounted terminal.

In the solution shown in this embodiment of this application, the user may trigger, by tapping the vehicle diagnosis function option in the mobile terminal, the mobile terminal to send the vehicle diagnosis instruction to the vehicle-mounted terminal. Further, the vehicle-mounted terminal may perform diagnosis detection on each system and component, and return a diagnosis result to the mobile terminal. The user can view the vehicle diagnosis result on the mobile terminal.

In a possible implementation, the method further includes: receiving a data processing request sent by the vehicle-mounted terminal, where the data processing request carries to-be-processed data and a service type identifier; processing the to-be-processed data by using a service execution program corresponding to the service type identifier, to obtain output data; and sending the output data to the vehicle-mounted terminal.

In the solution shown in this embodiment of this application, it is considered that currently a calculation capability of the mobile terminal is strong, a calculation capability of the vehicle-mounted terminal is weak, and hardware upgrade costs of the vehicle-mounted terminal are high. Therefore, the mobile terminal may be used to assist the vehicle-mounted terminal in service data calculation, so that service data calculation efficiency is improved without replacing hardware of the vehicle-mounted terminal.

In a possible implementation, the method further includes: receiving travel data sent by the vehicle-mounted terminal, storing the travel data, and sending the travel data to the server.

In the solution shown in this embodiment of this application, if a black box of the vehicle is damaged, the travel data may be lost. The black box of the vehicle may send travel data collected in a current transfer periodicity to the vehicle-mounted terminal at the end of each transfer periodicity. The vehicle-mounted terminal sends the travel data to the mobile terminal by using a vehicle-mounted gateway. The mobile terminal stores the travel data, and forwards the travel data to the server. In this way, the travel data of the vehicle may be stored in the mobile terminal and the server. Even if the black box of the vehicle is damaged, the travel data can be obtained from the mobile terminal and the server, and can be viewed in case of accident determining.

According to a second aspect, a method for performing function assistance on a vehicle-mounted terminal is provided, where the method is applied to a mobile terminal. The method includes: establishing a communication connection to the vehicle-mounted terminal, receiving an upgrade message that corresponds to a program and that is sent by a server, and displaying an upgrade option corresponding to the program. When it is detected that the upgrade option is triggered, an upgrade package obtaining request corresponding to the program is sent to the server, and an upgrade package sent by the server is received, and is sent to the vehicle-mounted terminal.

In a possible implementation, the upgrade message carries a latest version identifier of the program. Before the displaying an upgrade option corresponding to the program, the method further includes: sending an installed version identifier obtaining request corresponding to the program to the vehicle-mounted terminal, and receiving an installed version identifier of the program sent by the vehicle-mounted terminal. If the installed version identifier is different from the latest version identifier, the upgrade option corresponding to the program is displayed.

In a possible implementation, the program is firmware of the vehicle-mounted terminal.

In a possible implementation, the program is a map application of the vehicle-mounted terminal.

In a possible implementation, the method further includes:
displaying a plurality of vehicle control options; and when it is detected that a target vehicle control option in the plurality of vehicle control options is triggered, determining a vehicle control instruction corresponding to the target vehicle control option, and sending the vehicle control instruction to the vehicle-mounted terminal.

In a possible implementation, the target vehicle control option is a braking function option, and the vehicle control instruction is a braking instruction.

In a possible implementation, the target vehicle control option is a vehicle diagnosis function option, and the vehicle control instruction is a vehicle diagnosis instruction; and
the method further includes:
receiving a vehicle diagnosis result message sent by the vehicle-mounted terminal.

In a possible implementation, the method further includes:
receiving a data processing request sent by the vehicle-mounted terminal, where the data processing request carries to-be-processed data and a service type identifier;
processing the to-be-processed data by using a service execution program corresponding to the service type identifier, to obtain output data; and
sending the output data to the vehicle-mounted terminal.

In a possible implementation, the method further includes:
receiving travel data sent by the vehicle-mounted terminal, and storing the travel data.

In a possible implementation, the method further includes: sending the travel data to the server.

According to a third aspect, a method for performing function assistance on a vehicle-mounted terminal is provided, where the method is applied to a vehicle-mounted terminal. The method includes: establishing a communication connection to a mobile terminal, receiving an upgrade package that corresponds to a program and that is sent by the mobile terminal, and sending the upgrade package to the vehicle-mounted terminal.

According to a fourth aspect, an apparatus for performing function assistance on a vehicle-mounted terminal is provided, where the apparatus is applied to a mobile terminal. The apparatus includes:
a communication module, configured to establish a communication connection to a vehicle-mounted terminal;
a receiving module, configured to receive a program upgrade message sent by a server;
a display module, configured to display an upgrade option corresponding to the program; and
a sending module, configured to: when it is detected that the upgrade option is triggered, send an upgrade package obtaining request corresponding to the program to the server, where
the receiving module is further configured to receive an upgrade package sent by the server; and
the sending module is further configured to send the upgrade package to the vehicle-mounted terminal.

In a possible implementation, the upgrade message carries a latest version identifier of the program, and the sending module is further configured to:
send an installed version identifier obtaining request corresponding to the program to the mobile terminal;
the receiving module is further configured to:
   receive an installed version identifier that is of the program and that is sent by the vehicle-mounted terminal; and
   the display module is configured to: display, if the installed version identifier is different from the latest version identifier, the upgrade option corresponding to the program.

In a possible implementation, the program is firmware of the vehicle-mounted terminal.

In a possible implementation, the program is a map application of the vehicle-mounted terminal.

In a possible implementation, the display module is further configured to:
display a plurality of vehicle control options; and
the sending module is further configured to:
   when it is detected that a target vehicle control option in the plurality of vehicle control options is triggered, determine a vehicle control instruction corresponding to the target vehicle control option, and send the vehicle control instruction to the vehicle-mounted terminal.

In a possible implementation, the target vehicle control option is a braking function option, and the vehicle control instruction is a braking instruction.

In a possible implementation, the target vehicle control option is a vehicle diagnosis function option, and the vehicle control instruction is a vehicle diagnosis instruction; and
the receiving module is further configured to:
receive a vehicle diagnosis result message sent by the vehicle-mounted terminal.

In a possible implementation, the receiving module is further configured to:
receive a data processing request sent by the vehicle-mounted terminal, where the data processing request carries to-be-processed data and a service type identifier;
the apparatus further includes:
   a calculation module, configured to process the to-be-processed data by using a service execution program corresponding to the service type identifier, to obtain output data; and
   the sending module is further configured to:
      send the output data to the vehicle-mounted terminal.

In a possible implementation, the receiving module is further configured to:
receive travel data sent by the vehicle-mounted terminal;
the apparatus further includes:
   a storage module, configured to store the travel data; and
   the sending module is further configured to:
      send the travel data to the server.

According to a fifth aspect, a mobile terminal is provided, where the mobile terminal includes a processor and a memory.

The memory is configured to store instructions.

The processor is configured to: load and execute the instructions, to implement the method for performing function assistance on a vehicle-mounted terminal according to the second aspect.

According to a sixth aspect, a computer-readable storage medium is provided. The computer-readable storage medium stores instructions, and the instructions are loaded and executed by a processor, to implement the method for performing function assistance on a vehicle-mounted terminal according to the second aspect.

According to a seventh aspect, a computer program product is provided. The computer program product includes instructions, and the instructions are loaded and executed by a processor, to implement the method for performing function assistance on a vehicle-mounted terminal according to the second aspect.

Beneficial effects brought by the technical solutions provided in embodiments of this application are as follows.

In embodiments of this application, the mobile terminal may establish a communication connection to the vehicle-mounted terminal. After receiving an upgrade message that corresponds to a program and that is sent by the server, the mobile terminal displays an upgrade option corresponding to the program. The user may choose to tap the upgrade option on a proper occasion, to trigger the mobile terminal to send an upgrade package obtaining request corresponding to the program to the server. After receiving the upgrade package obtaining request, the server returns an upgrade package of the program to the mobile terminal. It can be learned that, in this solution, an occasion for downloading the upgrade package may be determined by the user. For example, when the user is at home and there is a wireless network, the user may tap the upgrade option. In this way, mobile data traffic can be saved. When the user is in a vehicle, the downloaded upgrade package is sent to the vehicle-mounted terminal through a communication connection between the mobile terminal and the vehicle-mounted terminal. In this way, an upgrade manner that can be used by the user is not limited to a vehicle-mounted terminal, so that a program in a vehicle is upgraded more flexibly, and user experience is better. In addition, because hardware performance of the mobile terminal is better, after the mobile terminal is connected to the vehicle-mounted terminal, the mobile terminal may be used as a part of the vehicle-mounted terminal, to more efficiently assist the vehicle-mounted terminal in implementing an operation like program upgrade.

### BRIEF DESCRIPTION OF DRAWINGS

FIG. 1 is a schematic diagram of a system for performing function assistance on a vehicle-mounted terminal according to an embodiment of this application;
FIG. 2 is a flowchart of a method for performing function assistance on a vehicle-mounted terminal according to an embodiment of this application;
FIG. 3 is a flowchart of a method for performing function assistance on a vehicle-mounted terminal according to an embodiment of this application;
FIG. 4 is a flowchart of a method for assisting an application in registration according to an embodiment of this application;
FIG. 5 is a flowchart of a method for assisting an application in login according to an embodiment of this application;
FIG. 6 is a flowchart of a method in which a server sends an upgrade package to a mobile terminal according to an embodiment of this application;
FIG. 7 is a flowchart of a method in which a server sends an upgrade package to a mobile terminal according to an embodiment of this application;
FIG. 8 is a flowchart of a method in which a server sends an upgrade package to a mobile terminal according to an embodiment of this application;
FIG. 9 is a flowchart of a method in which a mobile terminal assists in upgrading firmware in a vehicle according to an embodiment of this application;
FIG. 10 is a flowchart of a method in which a mobile terminal assists in upgrading a high-definition map in a vehicle according to an embodiment of this application;
FIG. 11 is a flowchart of a method in which a mobile terminal assists in performing vehicle diagnosis according to an embodiment of this application;
FIG. 12 is a schematic diagram of a structure of an apparatus for performing function assistance on a vehicle-mounted terminal according to an embodiment of this application; and
FIG. 13 is a schematic diagram of a structure of a mobile terminal according to an embodiment of this application.

### DESCRIPTION OF EMBODIMENTS

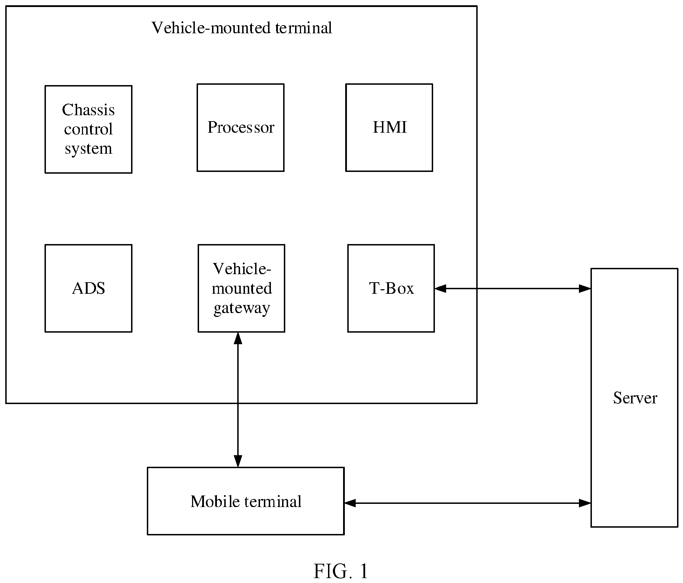

Embodiments of this application provide a method for performing function assistance on a vehicle-mounted terminal. The method may be implemented by a system for performing function assistance on the vehicle-mounted terminal. As shown in FIG. 1, the system includes a mobile terminal, a vehicle-mounted terminal, and a server. The mobile terminal may be a mobile phone, a tablet computer, a notebook computer, or the like. The vehicle-mounted terminal is disposed on a vehicle, and includes a vehicle-mounted gateway, a T-Box, a human machine interface (Human Machine Interface, HMI), a processor, a chassis control system, an automated driving system (Automated Driving System, ADS), and the like. The server may provide a plurality of functions such as program upgrade and travel data storage.

The T-Box is configured to establish a communication relationship with the server, to implement interaction between the vehicle-mounted terminal and the server. The vehicle-mounted gateway may have a wireless communication function, and specifically, may have a Wi-Fi communication function, a Bluetooth communication function, and the like. The vehicle-mounted gateway is configured to establish a communication connection to the mobile terminal, to implement interaction between the vehicle-mounted terminal and the mobile terminal. The chassis control system is configured to implement control on a chassis. Specifically, the chassis control system may control the chassis to implement braking, acceleration, steering, or the like. The automated driving system is configured to implement vehicle positioning, traveling navigation, traveling policy calculation, and the like. The HMI is configured to display a user operation interface, and the processor is configured to: obtain and execute instructions sent by a user by using the HMI.

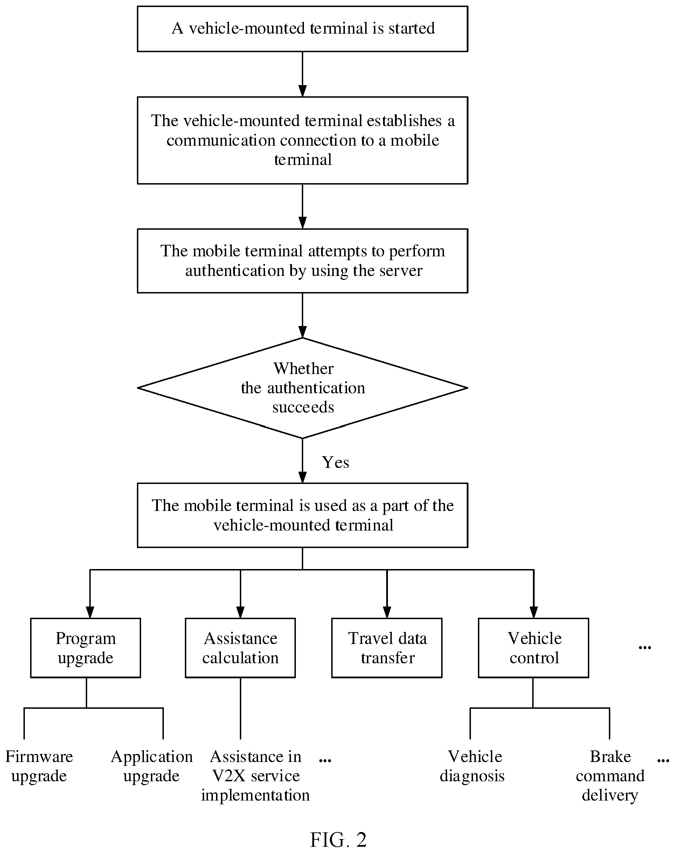

As shown in FIG. 2, in this embodiment of this application, after a vehicle-mounted terminal is started, the vehicle-mounted terminal establishes a communication connection to a mobile terminal, and then the vehicle-mounted terminal attempts to perform authentication by using a server. If the authentication succeeds, the mobile terminal is used as a part of the vehicle-mounted terminal, to assist the vehicle-mounted terminal in implementing program upgrade, vehicle control, travel data transfer, assistance calculation, and the like. Specifically, the program upgrade further includes firmware upgrade, high-definition map upgrade, and the like. Firmware is software embedded in a hardware device. Vehicle control further includes vehicle diagnosis, braking instruction delivery, and the like. The assistance calculation may include: assisting in implementing a V2X service.

According to this application, in addition to implementing program upgrade, driving control, and the like on the vehicle by using the vehicle-mounted terminal, a user may further implement program upgrade, driving control, and the like on the vehicle by using the mobile terminal. In this way, more selection space and use experience are provided for the user. In addition, the mobile terminal may further use a powerful calculation capability of the mobile terminal to assist the vehicle-mounted terminal in performing data calculation, so that the vehicle-mounted terminal can still quickly obtain a calculation result when a hardware calculation capability is weak, and hardware costs of the vehicle-mounted terminal are reduced.

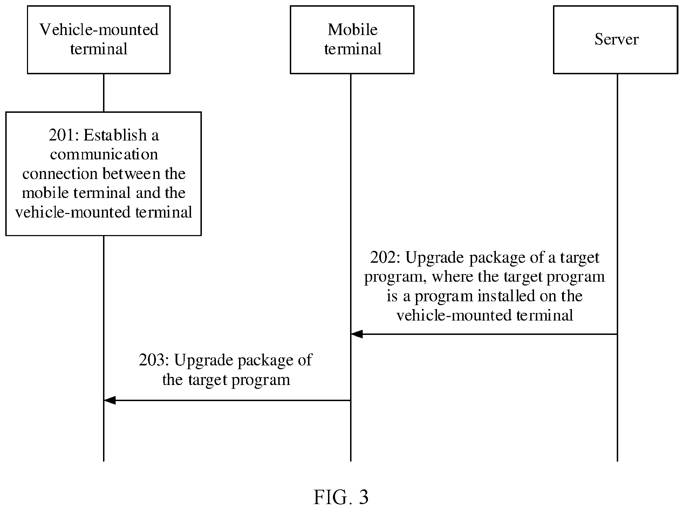

FIG. 3 shows a method for performing function assistance on a vehicle-mounted terminal according to an embodiment of this application. The method is implemented by the foregoing system for performing function assistance on the vehicle-mounted terminal. A processing procedure of the method may include the following steps.

Step 201: A mobile terminal establishes a communication connection to a vehicle-mounted terminal.

The communication connection may be a wireless connection, for example, a Wi-Fi connection or a Bluetooth connection, or may be a wired connection, for example, a connection by using a data cable.

During implementation, when a user needs to use the mobile terminal to assist the vehicle-mounted terminal, the user may use a data cable to connect the mobile terminal and the vehicle-mounted terminal, to implement a communication connection between the mobile terminal and the vehicle-mounted terminal. A wireless connection function of the mobile terminal may be further enabled, so that the mobile terminal sends a wireless signal. After receiving the wireless signal, the vehicle-mounted gateway of the vehicle-mounted terminal establishes a communication connection to the mobile terminal, where the communication connection is a wireless connection.

When the communication connection is a wireless connection, for example, the user may enable a Wi-Fi sharing function of the mobile terminal, where the Wi-Fi sharing function may alternatively be referred to as a Wi-Fi hotspot. Then, the mobile terminal sends a Wi-Fi signal. After receiving the Wi-Fi signal, the vehicle-mounted gateway of the vehicle-mounted terminal establishes a Wi-Fi connection to the mobile terminal. For another example, the user may enable a Bluetooth function of the mobile terminal. Then, the mobile terminal sends a Bluetooth signal. After receiving the Bluetooth signal, the vehicle-mounted gateway of the vehicle-mounted terminal establishes a Bluetooth connection to the mobile terminal.

In a possible implementation, to ensure quality of the communication connection between the vehicle-mounted terminal and the mobile terminal, the vehicle-mounted terminal may select one of a plurality of communication connections as a primary connection, and use another communication connection as a standby connection.

During implementation, the user may enable a plurality of wireless connection functions in the mobile terminal, for example, Wi-Fi and Bluetooth. Correspondingly, the mobile terminal sends a plurality of wireless signals. After receiving the plurality of wireless signals, the vehicle-mounted gateway of the vehicle-mounted terminal separately establishes, corresponding to the plurality of wireless signals, communication connections to the mobile terminal. Then, the vehicle-mounted gateway may detect communication quality of the plurality of communication connections by sending detection data packets to the mobile terminal. The communication quality may be evaluated by using a parameter like a data transmission delay. For example, if a data transmission delay is lower, it is determined that communication quality of a communication link is higher. Finally, the vehicle-mounted gateway may select, from the plurality of communication connections, a communication connection having best communication quality as a primary connection, and use remaining communication connections as standby connections.

Then, the vehicle-mounted gateway may send a primary connection setting message to the mobile terminal. After receiving the primary connection setting message, the mobile terminal sets a communication connection that transmits the primary connection setting message as a primary connection. In this way, the primary connection is first used for subsequent data exchange between the mobile terminal and the vehicle-mounted terminal. When the primary connection is disconnected, data exchange is actively switched to a standby connection to be performed.

In addition, the vehicle-mounted gateway may detect communication quality of the plurality of established communication connections every preset duration, to reselect a primary connection. The preset duration may be set by a skilled person based on an actual situation. For example, the preset duration may be set to 30 minutes, 60 minutes, or the like. After a primary connection is reselected each time, if a primary connection selected this time is different from a primary connection selected last time, the vehicle-mounted gateway may send a primary connection setting message to the mobile terminal through the newly selected primary connection. After receiving the primary connection setting message, the mobile terminal sets a communication connection that transmits the primary connection setting message as a primary connection. If the primary connection selected this time is the same as the primary connection selected last time, the vehicle-mounted gateway does not need to send a primary connection setting message to the mobile terminal again.

The following describes setting of a primary connection by using an example in which the plurality of communication connections include a Wi-Fi connection and a Bluetooth connection.

The user simultaneously enables the Wi-Fi sharing function and the Bluetooth function of the mobile terminal. Then, the mobile terminal sends a Wi-Fi signal and a Bluetooth signal. After receiving the Bluetooth signal, the vehicle-mounted gateway of the vehicle-mounted terminal establishes the Bluetooth connection to the mobile terminal; and after receiving the Wi-Fi signal, the vehicle-mounted gateway of the vehicle-mounted terminal establishes the Wi-Fi connection to the mobile terminal. After both the two communication connections are established, the vehicle-mounted gateway may detect data transmission delays of the Wi-Fi connection and the Bluetooth connection, set a communication connection having a low data transmission delay as a primary connection, and set the other communication connection as a standby connection. After the preset duration, if the two communication connections still exist, the vehicle-mounted gateway may detect data transmission delays of the two communication connections again, set a communication connection having a low data transmission delay as a primary connection, and set the other communication connection as a standby connection. If it is detected that a data transmission delay of the Wi-Fi connection is lower, the vehicle-mounted gateway sets the Wi-Fi connection as a primary connection. Then, the vehicle-mounted gateway sends a primary connection setting message to the mobile terminal through the Wi-Fi connection. After receiving the primary connection setting message, the mobile terminal sets the Wi-Fi connection as a primary connection.

After the preset duration, the vehicle-mounted gateway detects data transmission delays of the Wi-Fi connection and the Bluetooth connection again, set a communication connection having a low data transmission delay as a primary connection, and set the other communication connection as a standby connection. If it is detected that a data transmission delay of the Bluetooth connection is lower this time, the vehicle-mounted gateway sets the Bluetooth connection as a primary connection, and sends a primary connection setting message to the mobile terminal through the Bluetooth connection. After receiving the primary connection setting message, the mobile terminal sets the Bluetooth connection as a primary connection. If it is detected that a data transmission delay of the Wi-Fi connection is lower this time, it is determined that the primary connection selected this time is the same as the primary connection selected last time. In this case, the vehicle-mounted gateway no longer sends a primary connection setting message to the mobile terminal.

In addition, it should be further noted that the setting of a primary connection may alternatively be implemented by the mobile terminal. Details may be as follows.

The user enables a plurality of wireless connection functions in the mobile terminal, and correspondingly, the mobile terminal sends a plurality of wireless signals. After receiving the plurality of wireless signals, the vehicle-mounted gateway of the vehicle-mounted terminal separately establishes, corresponding to the plurality of wireless signals, communication connections to the mobile terminal. Then, the mobile terminal may detect communication quality of the plurality of communication connections by sending detection data packets to the vehicle-mounted terminal. Finally, the mobile terminal may select, from the plurality of communication connections, a communication connection having best communication quality as a primary connection, and use remaining communication connections as standby connections. In addition, the mobile terminal may send a primary connection setting message to the vehicle-mounted terminal through the primary connection. After receiving the primary connection setting message, the vehicle-mounted terminal sets a communication connection that transmits the primary connection setting message as a primary connection.

In addition, the mobile terminal may send a primary connection setting message to the vehicle-mounted terminal through the primary connection. After receiving the primary connection setting message, the vehicle-mounted terminal sets a communication connection that transmits the primary connection setting message as a primary connection. In this way, the primary connection is first used for subsequent data exchange between the mobile terminal and the vehicle-mounted terminal. When the primary connection is disconnected, data exchange is actively switched to a standby connection to be performed.

In addition, the mobile terminal may detect communication quality of the plurality of established communication connections every preset duration, to reselect a primary connection. If a primary connection selected this time is different from a primary connection selected last time, the mobile terminal may send a primary connection setting message to the vehicle-mounted terminal through the newly selected primary connection. After receiving the primary connection setting message, the vehicle-mounted terminal sets a communication connection that transmits the primary connection setting message as a primary connection. If the primary connection selected this time is the same as the primary connection selected last time, the mobile terminal does not need to send a primary connection setting message to the vehicle-mounted terminal again.

Step 202: The server sends an upgrade package of a target program to the mobile terminal, where the target program is a program installed on the vehicle-mounted terminal.

The target program may be firmware of the mobile terminal, for example, firmware of an HMI, firmware of an ADS, or firmware of a chassis control system in the mobile terminal. Alternatively, the target program may be an application installed on the vehicle-mounted terminal, for example, a high-definition map application.

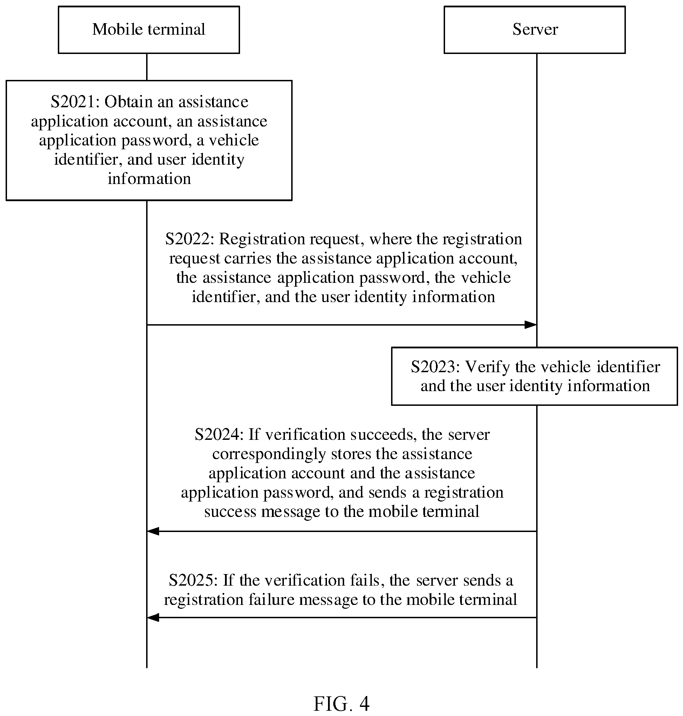

In implementation, a prerequisite for implementing step 202 is that an assistance application is installed on the mobile terminal, and the assistance application has completed registration and login in the server. In addition, an account to which the assistance application logs in needs to be bound to the vehicle. To facilitate description of an implementation of step 202, the following first describes account registration of the assistance application, binding between the assistance application account and the vehicle, and account login of the assistance application.
1. Registration of the assistance application. As shown in FIG. 4, the registration of the assistance application may include the following steps.

S2021: The mobile terminal obtains the assistance application account, an assistance application password, a vehicle identifier, and user identity information.

The vehicle identifier is information that uniquely identifies a vehicle, for example, a vehicle identification number of the vehicle. The user identity information may be an identity card number.

During implementation, the user may enable the assistance application installed on the mobile terminal. After the assistance application is enabled, if currently the assistance application has not logged in to any account, an initial interface is displayed. A registration option and a login option are displayed on the initial interface. If an account needs to be registered, the registration option may be selected. After detecting a selection operation performed by the user on the registration option, the mobile terminal may enable the assistance application to jump to a registration interface. The selection operation may be a tap operation, a touch and hold operation, a slide operation, or the like.

The registration interface may display an account input box, a password input box, a vehicle identifier input box, a user identity information input box, and a confirmation option. For example, the vehicle identifier is a vehicle identification number, and the user identity information is an identity card number. Correspondingly, the registration interface of the assistance application displays an account input box, a password input box, a vehicle identification number input box, an identity card number input box, and a registration option.

The user enters the assistance application account into the account input box, enters the assistance application password into the password input box, enters the vehicle identifier into the vehicle identifier input box, and enters the user identity information into the user identity information input box. When it is confirmed that the entered information is correct, the user may tap the confirmation option. After the user taps the confirmation option, the mobile terminal obtains the assistance application account, the assistance application password, the vehicle identifier, and the user identity information that are entered by the user.

S2022: The mobile terminal sends a registration request to the server, where the registration request carries the assistance application account, the assistance application password, the vehicle identifier, and the user identity information.

During implementation, after obtaining the assistance application account, the assistance application password, the vehicle identifier, and the user identity information that are entered by the user, the mobile terminal sends the registration request to the server, where the registration request carries the assistance application account, the assistance application password, the vehicle identifier, and the user identity information.

S2023: The server verifies the vehicle identifier and the user identity information.

During implementation, after the vehicle is sold, when the user starts the vehicle-mounted terminal for the first time, the user needs to complete user registration on the vehicle-mounted terminal. After the vehicle-mounted terminal is started for the first time, a user registration interface may be displayed on a display of the vehicle-mounted terminal. The user registration interface may display a user identity information account input box, a password input box, a vehicle identifier input box, a user identity information input box, and a confirmation option.

The user enters a vehicle-mounted terminal application account into the account input box, enters a vehicle-mounted terminal application password into the password input box, enters a first vehicle identifier into the vehicle identifier input box, and enters first user identity information into the user identity information input box. When it is confirmed that the entered information is correct, the user may tap the confirmation option. After the user taps the confirmation option, the vehicle-mounted terminal obtains the vehicle-mounted terminal application account, the vehicle-mounted terminal application password, the vehicle identifier, and the user identity information that are entered by the user. Then, the vehicle-mounted terminal sends a user registration request to the server by using the T-Box, where the user registration request carries the vehicle-mounted terminal application account, the vehicle-mounted terminal application password, the vehicle identifier, and the user identity information.

After receiving the user registration request, the server correspondingly stores the vehicle-mounted terminal application account, the vehicle-mounted terminal application password, the first vehicle identifier, and the first user identity information as vehicle registration information. The vehicle-mounted terminal application account and the vehicle-mounted terminal application password are used for login verification on the vehicle-mounted terminal. The vehicle identifier and the user identity information are used for registration verification on the assistance application.

Then, the server sends a user registration success message to the vehicle-mounted terminal. After completing registration, the vehicle-mounted terminal automatically logs in to a registered account. In addition, each time the vehicle-mounted terminal is started hereinafter, the vehicle-mounted terminal may automatically log in to the registered account.

On a basis that the vehicle-mounted terminal completes user registration, the server may verify, based on a correspondence between the vehicle identifier and the user identity information that are in the vehicle registration information, the vehicle identifier and the user identity information that are carried in the registration request of the assistance application.

Specifically, the server may determine whether the vehicle identifier and the user identity information that are carried in the registration request of the assistance application are correspondingly stored in the correspondence between the vehicle identifier and the user identity information that are in the stored vehicle registration information.

S2024: If verification succeeds, the server correspondingly stores the assistance application account and the assistance application password, and sends a registration success message to the mobile terminal.

During implementation, if the server determines that the vehicle identifier and the user identity information that are carried in the registration request are correspondingly stored in the correspondence between the vehicle identifier and the user identity information that are in the vehicle registration information, it is considered that the verification succeeds. Then, the server may correspondingly store the assistance application account and the assistance application password as the registration information of the assistance application, and send the registration success message to the mobile terminal.

During implementation, if the server determines that the vehicle identifier and the user identity information that are carried in the registration request are not correspondingly stored in the correspondence between the vehicle identifier and the user identity information that are in the stored vehicle registration information, it is considered that the verification fails, and the server sends a registration recognition message to the mobile terminal.

S2025: If the verification fails, the server sends a registration failure message to the mobile terminal.

2. Binding between the assistance application account and the vehicle.

Based on the foregoing step S204, the server correspondingly stores the assistance application account of the assistance application and the vehicle-mounted terminal application account corresponding to both the vehicle identifier and the user identity information that are in the vehicle registration information. Alternatively, the server correspondingly stores the assistance application account of the assistance application and the vehicle identifier that is in the vehicle registration information. In both manners, the assistance application and the vehicle can be bound.

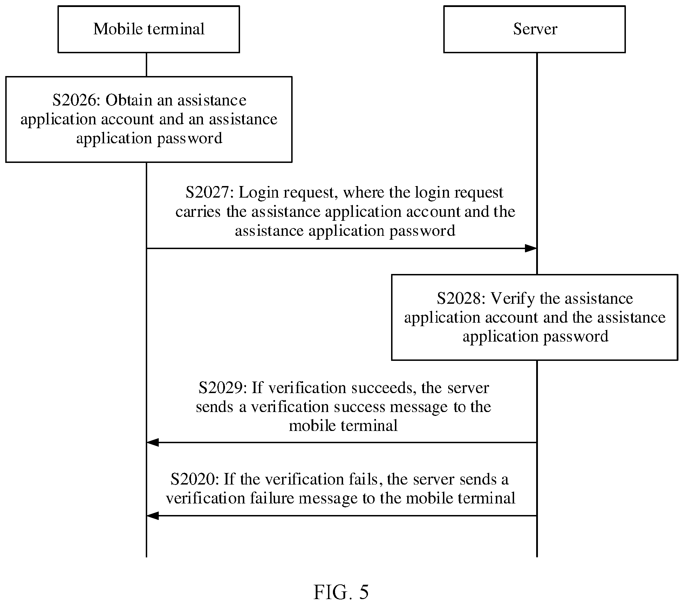

3. Login of the assistance application. The login process may alternatively be considered as a process in which the mobile terminal attempts to be authenticated by using the server. As shown in FIG. 5, the login of the assistance application may include the following steps.

S2026: The mobile terminal obtains the assistance application account and the assistance application password.

During implementation, the user may enable the assistance application installed on the mobile terminal. After the assistance application is enabled, if currently the assistance application has not logged in to any account, an initial interface is displayed. A registration option and a login option are displayed on the initial interface. If an account needs to be logged in, the login option may be selected. After detecting a selection operation performed by the user on the login option, the mobile terminal may enable the assistance application to jump to a registration interface.

The login interface may display an account input box, a password input box, and a confirmation option. The user enters the assistance application account into the account input box and enters the assistance application password into the password input box. When it is confirmed that the entered information is correct, the user may tap the confirmation option. After the user taps the confirmation option, the mobile terminal obtains the assistance application account and the assistance application password that are entered by the user.

S2027: The mobile terminal sends a login request to the server, where the login request carries the assistance application account and the assistance application password.

During implementation, after obtaining the assistance application account and the assistance application password that are entered by the user, the mobile terminal sends the login request to the server, where the login request carries the assistance application account and the assistance application password.

S2028: The server verifies the assistance application account and the assistance application password.

During implementation, the server determines whether the assistance application account and the assistance application password that are carried in the login request are correspondingly stored in the correspondence between the assistance application account and the assistance application password that are in the stored registration information of the assistance application.

S2029: If verification succeeds, the server sends a verification success message to the mobile terminal.

During implementation, if the server determines that the assistance application account and the assistance application password that are carried in the login request are correspondingly stored in the correspondence between the assistance application account and the assistance application password that are in the stored registration information of the assistance application, it is considered that the verification succeeds, and the server sends the verification success message to the mobile terminal.

S2030: If the verification fails, the server sends a verification failure message to the mobile terminal.

During implementation, if the server determines that the assistance application account and the assistance application password that are carried in the login request are not correspondingly stored in the correspondence between the assistance application account and the assistance application password that are in the stored registration information of the assistance application, it is considered that the verification fails, and the server sends the verification failure message to the mobile terminal.

On a basis that the assistance application installed on the mobile terminal completes registration, login, and binding with the vehicle, the mobile terminal may be used as a part of the vehicle-mounted terminal, and share a calculation capability of the mobile terminal with the vehicle-mounted terminal, to assist the vehicle-mounted terminal in implementing a plurality of functions, such as program upgrade, vehicle control, travel data transfer, and assistance calculation. The following separately describes how the mobile terminal assists the vehicle-mounted terminal in implementing program upgrade, vehicle control, travel data transfer, and assistance calculation.
1. The mobile terminal assists the vehicle-mounted terminal in implementing program upgrade.

As shown in step 202, when the mobile terminal assists the vehicle-mounted terminal in program upgrade, the server sends an upgrade package of a target program to the mobile terminal, where the target program is a program installed on the vehicle.

During implementation, there may be a plurality of triggering methods for the server to send the upgrade package of the target program to the mobile terminal. The following describes several of the triggering methods.

Method 1: After receiving an upgrade request that corresponds to the target program and that is sent by the mobile terminal, the server sends the upgrade package of the target program to the mobile terminal.

In Method 1, the mobile terminal may determine whether the target program needs to be upgraded, or the vehicle-mounted terminal may determine whether the target program needs to be upgraded. The following separately describes cases in which the mobile terminal and the vehicle-mounted terminal determine whether the target program needs to be upgraded.

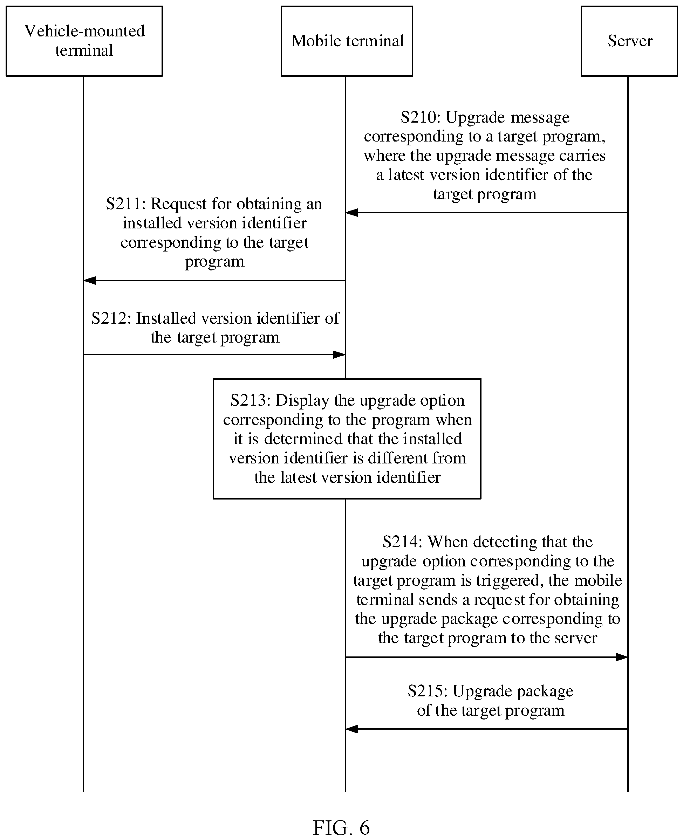

Case 1: The mobile terminal determines whether the target program needs to be upgraded. For details, refer to FIG. 6. In this case, Method 1 may include the following steps.

S210: The server sends an upgrade message corresponding to the target program to a mobile terminal, where the upgrade message carries a latest version identifier of the target program.

During implementation, when the target program needs to be upgraded, a skilled person may upload the upgrade package of the target program and a corresponding latest version number to the server. After receiving the upgrade package of the target program and the corresponding latest version identifier, the server may send the upgrade message corresponding to the target program to each mobile terminal that logs in to the assistance application, where the upgrade message carries a program identifier and the latest version identifier that are of the target program.

S211: The mobile terminal sends an installed version identifier obtaining request corresponding to the target program to the vehicle-mounted terminal.

The installed version identifier obtaining request corresponding to the target program carries the program identifier of the target program.

S212: The vehicle-mounted terminal sends an installed version identifier of the target program to the mobile terminal.

During implementation, an HMI of the vehicle-mounted terminal queries an installed version of the target program, and sends the installed version of the target program to the mobile terminal.

S213: When the mobile terminal determines that the installed version identifier is different from the latest version identifier, the upgrade option corresponding to the program is displayed.

During implementation, when the mobile terminal determines that the installed version identifier of the target program is different from the latest version identifier, an upgrade prompt box corresponding to the target program may be displayed, to remind the user that the target program needs to be upgraded. The user may choose to tap the upgrade prompt box of the target program on a proper occasion, to enable the assistance application to jump to a program upgrade interface. The upgrade option corresponding to the target program may be displayed on the program upgrade interface. The proper occasion may be, for example, an occasion on which there is a wireless network and the user can download the upgrade package without consuming mobile traffic.

S214: When detecting that the upgrade option corresponding to the target program is triggered, the mobile terminal sends an upgrade package obtaining request corresponding to the target program to the server.

During implementation, the user may perform a selection operation on the upgrade option corresponding to the target program. After detecting the selection operation performed on the upgrade option corresponding to the target program, the mobile terminal sends the upgrade package obtaining request corresponding to the target program to the server.

S215: The server sends the upgrade package of the target program to the mobile terminal.

During implementation, after receiving the upgrade package obtaining request corresponding to the target program, the server sends the upgrade package of the target program to the mobile terminal.

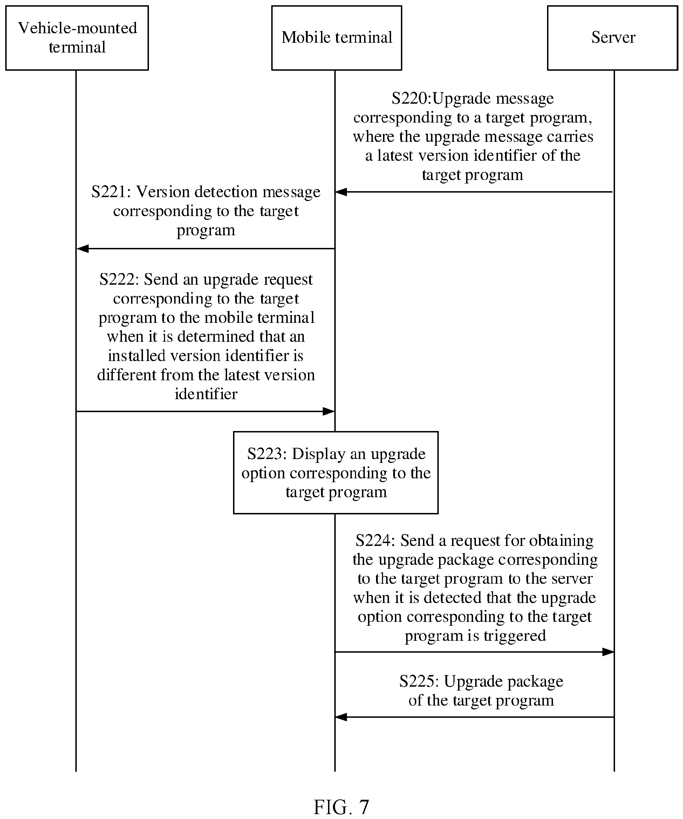

Case 2: The vehicle-mounted terminal determines whether the target program needs to be upgraded. For details, refer to FIG. 7. In this case, Method 1 may include the following steps.

S220: The server sends an upgrade message corresponding to the target program to a mobile terminal, where the upgrade message carries a latest version identifier of the target program.

S221: The mobile terminal sends a version detection message of the target program to the vehicle-mounted terminal.

The version detection message corresponding to the target program carries the program identifier of the target program and the corresponding latest version identifier.

S222: When determining that the installed version identifier is different from the latest version identifier, the vehicle-mounted terminal sends an upgrade request corresponding to the target program to the mobile terminal.

During implementation, a processor of the vehicle-mounted terminal queries the installed version of the target program, and compares the installed version identifier of the target program with the latest version identifier. If the installed version identifier of the target program is different from the latest version identifier, the vehicle-mounted terminal sends the upgrade request corresponding to the target program to the mobile terminal.

S223: The mobile terminal displays an upgrade option corresponding to the target program.

During implementation, after receiving the upgrade request corresponding to the target program, the mobile terminal may display an upgrade prompt box corresponding to the target program, to remind the user that the target program needs to be upgraded. The user may choose to tap the upgrade prompt box of the target program on a proper occasion, to enable the assistance application to jump to a program upgrade interface. The upgrade option corresponding to the target program may be displayed on the program upgrade interface.

S224: When detecting that the upgrade option corresponding to the target program is triggered, the mobile terminal sends an upgrade package obtaining request corresponding to the target program to the server.

During implementation, the user may perform a selection operation on the upgrade option corresponding to the target program. After detecting the selection operation performed on the upgrade option corresponding to the target program, the mobile terminal sends the upgrade package obtaining request corresponding to the target program to the server.

S225: The server sends the upgrade package of the target program to the mobile terminal.

During implementation, after receiving the upgrade package obtaining request corresponding to the target program, the server sends the upgrade package of the target program to the mobile terminal.

Method 2: When determining that the target program needs to be upgraded, the server sends an upgrade package of the target program to the mobile terminal.

In the method, the server may record an installed version identifier of a program installed on each vehicle-mounted terminal. Each time after upgrading a program, the vehicle-mounted terminal may send an upgrade success message for the program to the server. After receiving the upgrade notification message, the server may update a recorded installed version identifier of the program, so that the server may learn an installed version of a program installed on each mobile terminal.

Specifically, the server may record a correspondence between a vehicle identifier and an installed version identifier of a program installed on the vehicle-mounted terminal, or may record a correspondence between an account corresponding to the vehicle-mounted terminal and an installed version identifier of a program installed on the vehicle-mounted terminal. For each program, a correspondence between the vehicle identifier and an installed version identifier of the program installed on the vehicle-mounted terminal may be individually recorded, or a correspondence between the account corresponding to the vehicle-mounted terminal and an installed version identifier of the program installed on the vehicle-mounted terminal may be individually recorded.

The following Table 1 shows an example of a correspondence between the vehicle identifier and an installed version identifier of first firmware installed on the vehicle-mounted terminal.

**Table 1**

| First firmware | |
|---|---|
| Vehicle identifier | Installed version identifier |
| X1 | 10.1 |
| X2 | 10.2 |
| X3 | 10.1 |
| ... | ... |

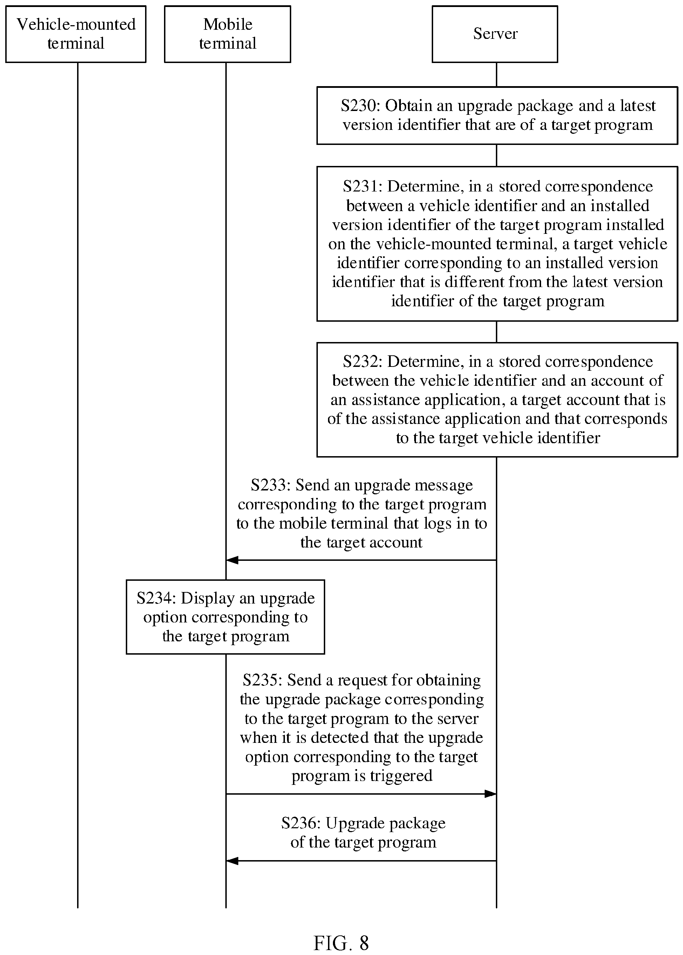

The following describes an implementation of Method 2 only by using a case in which the server records the correspondence between the vehicle identifier and the installed version identifier of the program installed on the vehicle-mounted terminal. As shown in FIG. 8, Method 2 may include the following steps.

S230: The server obtains an upgrade package and a latest version identifier that are of a target program.

During implementation, when the target program needs to be upgraded, a skilled person may upload the upgrade package of the target program and a corresponding latest version number to the server.

S231: The server determines, in a stored correspondence between a vehicle identifier and an installed version identifier of the target program installed on the vehicle-mounted terminal, a target vehicle identifier corresponding to the installed version identifier that is different from the latest version identifier of the target program.

During implementation, after receiving the upgrade package and the latest version identifier that are of the target program, the server may query, in the stored correspondence between the vehicle identifier and the installed version identifier of the target program installed on the vehicle-mounted terminal, an installed version identifier of the target program installed on each vehicle-mounted terminal. In addition, the server determines the target vehicle identifier corresponding to the installed version identifier that is different from the latest version identifier of the target program.

S232: The server determines, in a stored correspondence between the vehicle identifier and an assistance application account, a target account that is of the assistance application and that corresponds to the target vehicle identifier.

S233: The server sends an upgrade message corresponding to the target program to the mobile terminal that logs in to the target account.

During implementation, when the server determines that the target account is in a logged-in state, the server may send the upgrade message corresponding to the target program to the mobile terminal that logs in to the target account.

S234: The mobile terminal displays an upgrade option corresponding to the target program.

During implementation, when the mobile terminal determines that the installed version identifier of the target program is different from the latest version identifier, an upgrade prompt box corresponding to the target program may be displayed, to remind the user that the target program needs to be upgraded. The user may choose to tap the upgrade prompt box of the target program on a proper occasion, to enable the assistance application to jump to a program upgrade interface. The upgrade option corresponding to the target program may be displayed on the program upgrade interface.

S235: When detecting that the upgrade option corresponding to the target program is triggered, the mobile terminal sends an upgrade package obtaining request corresponding to the target program to the server.

During implementation, the user may perform a selection operation on the upgrade option corresponding to the target program. After detecting the selection operation performed on the upgrade option corresponding to the target program, the mobile terminal sends the upgrade package obtaining request corresponding to the target program to the server.

S236: The server sends the upgrade package of the target program to the mobile terminal.

During implementation, after receiving the upgrade package obtaining request corresponding to the target program, the server sends the upgrade package of the target program to the mobile terminal.

Step 203: The mobile terminal sends the upgrade package of the target program to the vehicle-mounted terminal.

During implementation, after receiving the upgrade package that is of the target program and that is sent by the server, the mobile terminal may display a prompt box indicating that the upgrade package is successfully downloaded, to remind the user that the upgrade package of the target program is downloaded. The user may enable, by tapping the prompt box indicating that the upgrade package is successfully downloaded, the assistance application to jump to an upgrade package sending interface, where an upgrade package sending option may be displayed on the upgrade package sending interface. When a communication connection has been established between the vehicle-mounted terminal and the mobile terminal, the user may tap the upgrade package sending option, to trigger the mobile terminal to send the upgrade package of the target program to the vehicle-mounted terminal.

After receiving the upgrade package of the target program, the vehicle-mounted gateway of the vehicle-mounted terminal sends the upgrade package of the target program to a processor of the vehicle-mounted terminal. The processor of the vehicle-mounted terminal upgrades the installed target program according to the upgrade package of the target program.

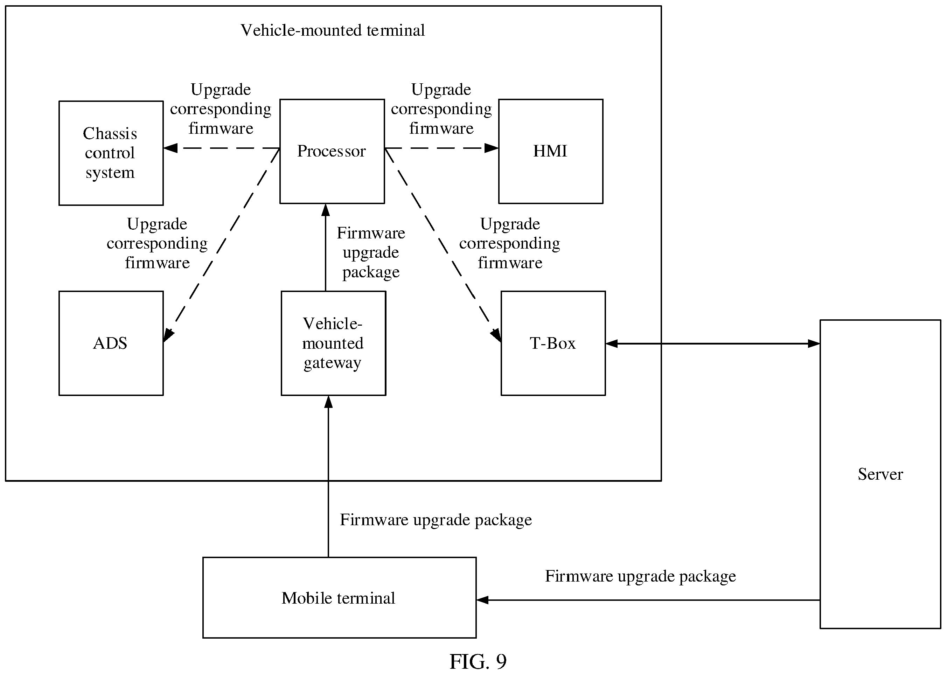

For example, as shown in FIG. 9, if the target program is firmware of a chassis control system, after receiving the upgrade package, the processor upgrades the firmware of the chassis control system based on the upgrade package. If the target program is firmware of an HMI, after receiving the upgrade package, the processor upgrades the firmware of the HMI based on the upgrade package. If the target program is firmware of a T-Box, after receiving the upgrade package, the processor upgrades the firmware of the T-Box based on the upgrade package. If the target program is firmware of an ADS, after receiving the upgrade package, the processor upgrades the firmware of the ADS based on the upgrade package.

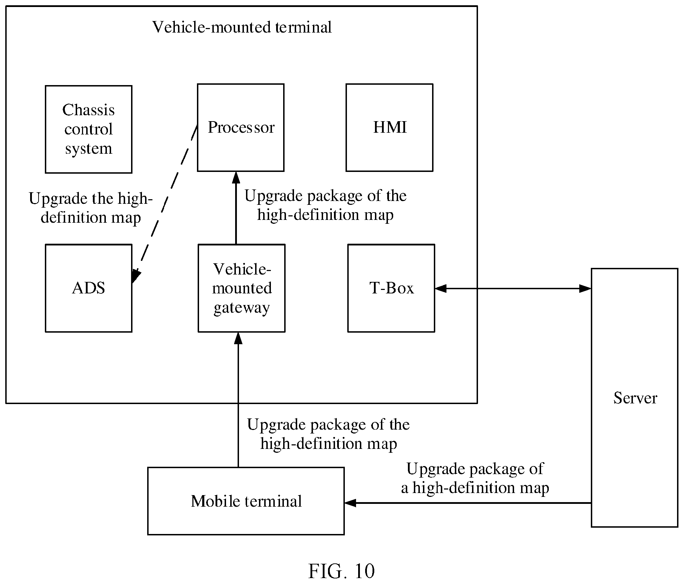

For another example, as shown in FIG. 10, when the target program is a high-definition map application, the upgrade package may be an encrypted high-definition map package. After receiving the encrypted high-definition map package, the processor first decompresses the encrypted high-definition map package, and then updates a decompressed high-definition map package to the high-definition map application of the ADS.

2. The mobile terminal assists the vehicle-mounted terminal in implementing vehicle control.

Specifically, vehicle control may include traveling control on the vehicle, vehicle diagnosis on the vehicle, and the like.

During implementation, on a basis that a connection has been established between the vehicle-mounted terminal and the mobile terminal, if a display interface of the vehicle-mounted terminal is faulty, the user cannot control the vehicle by using the vehicle-mounted terminal. In this case, the user may send a vehicle control instruction for the vehicle to the vehicle-mounted terminal by using the mobile terminal. After receiving the vehicle control instruction, the vehicle-mounted terminal may send a control command to a corresponding system, to control the vehicle.

Specifically, the user may start an assistance application in the mobile terminal, and a plurality of vehicle control options may be displayed on a function interface of the assistance application. The user may tap a target vehicle control option based on an actual requirement. When detecting that the target vehicle control option in the plurality of vehicle control options is triggered, the mobile terminal determines a vehicle control instruction corresponding to the target vehicle control option, and sends the vehicle control instruction to the vehicle-mounted terminal. After receiving the vehicle control instruction, the vehicle-mounted terminal may execute the vehicle control instruction, to perform corresponding control on the vehicle. The following uses examples in which the target vehicle control option is a braking option and a vehicle diagnosis option, to separately describe the case in which the mobile terminal assists the vehicle-mounted terminal in vehicle control.

The example in which the target vehicle control option is the braking control option is as follows.

The user taps the braking option. After detecting a tap operation performed by the user on the braking option, the mobile terminal sends a braking instruction to the vehicle-mounted gateway of the vehicle-mounted terminal. The vehicle-mounted gateway may forward the received emergency braking instruction to the processor of the vehicle-mounted terminal. Then, the processor sends a braking command to the chassis control system according to the emergency braking instruction. After receiving the braking command, the chassis control system responds to the braking command and controls corresponding components to brake the vehicle.

The example in which the target vehicle control option is the vehicle diagnosis option is as follows.

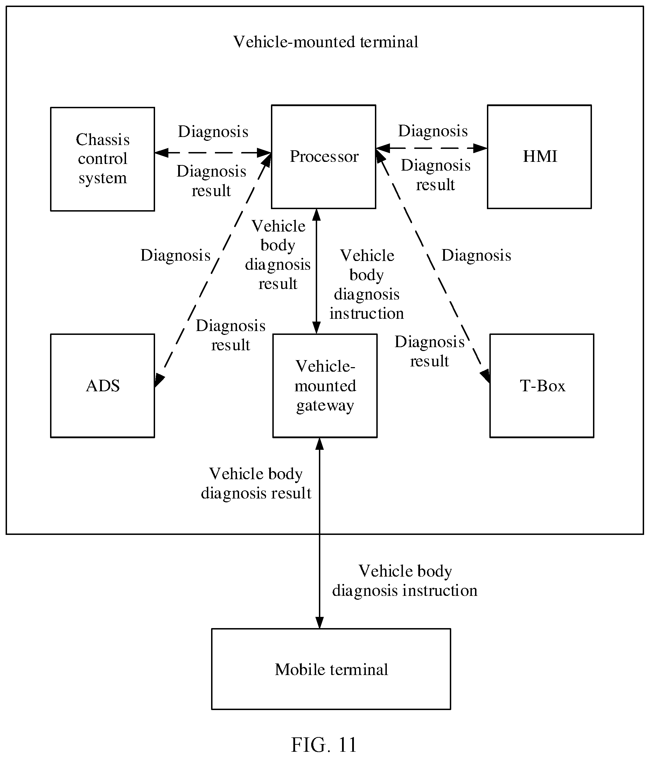

The user taps the vehicle diagnosis option. After detecting a tap operation performed by the user on the vehicle diagnosis option, the mobile terminal sends a vehicle diagnosis instruction to the vehicle-mounted gateway of the vehicle-mounted terminal. As shown in FIG. 11, a vehicle-mounted gateway may forward a received vehicle diagnosis instruction to a processor of a vehicle-mounted terminal. Then, the processor separately sends a diagnosis command to a chassis control system, an ADS, a T-Box, and the like according to the vehicle diagnosis instruction. After receiving the diagnosis command, all systems or components perform corresponding diagnosis operations and return diagnosis results to the processor. After receiving the diagnosis results returned by the systems or components, the processor sends all the diagnosis results, as a vehicle diagnosis result, to the mobile terminal by using the vehicle-mounted gateway. After receiving the vehicle diagnosis result, the mobile terminal may display the vehicle diagnosis result by using an assistance application, so that the user can view the vehicle diagnosis result. In addition, the mobile terminal may further store the vehicle diagnosis result.

3. The mobile terminal assists the vehicle-mounted terminal in performing travel data transfer.

During implementation, to prevent loss of travel data caused by damage to a black box of the vehicle, the black box of the vehicle may send travel data collected in a current transfer periodicity to the vehicle-mounted terminal at the end of each transfer periodicity. The vehicle-mounted terminal sends the travel data to the mobile terminal by using a vehicle-mounted gateway. The mobile terminal stores the travel data. In addition, when an assistance application is logged in on the mobile terminal, the travel data may be forwarded to the server. After receiving the travel data, the server first determines, based on a logged-in assistance application account and a stored correspondence between the assistance application account and a vehicle identifier, a vehicle identifier corresponding to the logged-in assistance application account, and then correspondingly stores the travel data and the vehicle identifier.

In this way, when subsequently an accident occurs on the vehicle, even if a black box of the vehicle is faulty and the travel data is lost, the travel data of the vehicle may still be obtained by using the mobile terminal and the server, to perform accident determining and the like.

4. The mobile terminal assists the vehicle-mounted terminal in performing service data calculation.

During implementation, it is considered that currently a calculation capability of the mobile terminal is strong, a calculation capability of the vehicle-mounted terminal is weak, and hardware upgrade costs of the vehicle-mounted terminal are high. Therefore, in this embodiment of this application, the mobile terminal is used to assist the vehicle-mounted terminal in service data calculation, so that service data calculation efficiency is improved without replacing hardware of the vehicle-mounted terminal.

When the vehicle-mounted terminal needs to perform service data calculation, if it is detected that a local available calculation resource is insufficient, and a communication connection is currently established between the vehicle-mounted terminal and the mobile terminal, the vehicle-mounted terminal may send a data processing request to the mobile terminal by using the vehicle-mounted gateway. The data processing request carries to-be-processed service data and a service type identifier. After receiving the data processing request, the mobile terminal processes the to-be-processed data by using a service execution program corresponding to the service type identifier carried in the data processing request, to obtain output data, and sends the output data to the vehicle-mounted terminal. The service execution program may be a function module of the foregoing assistance application, or may be an independent application.

The service type identifier may be a vehicle-to-everything (vehicle to everything, V2X) service identifier. Correspondingly, the to-be-processed service data may be sensor data such as data of a camera, a radar, an ultrasonic wave, or a temperature sensor. Alternatively, the service type identifier may be a three-dimensional modeling service identifier. Correspondingly, the to-be-processed service data may be two-dimensional map data or the like.

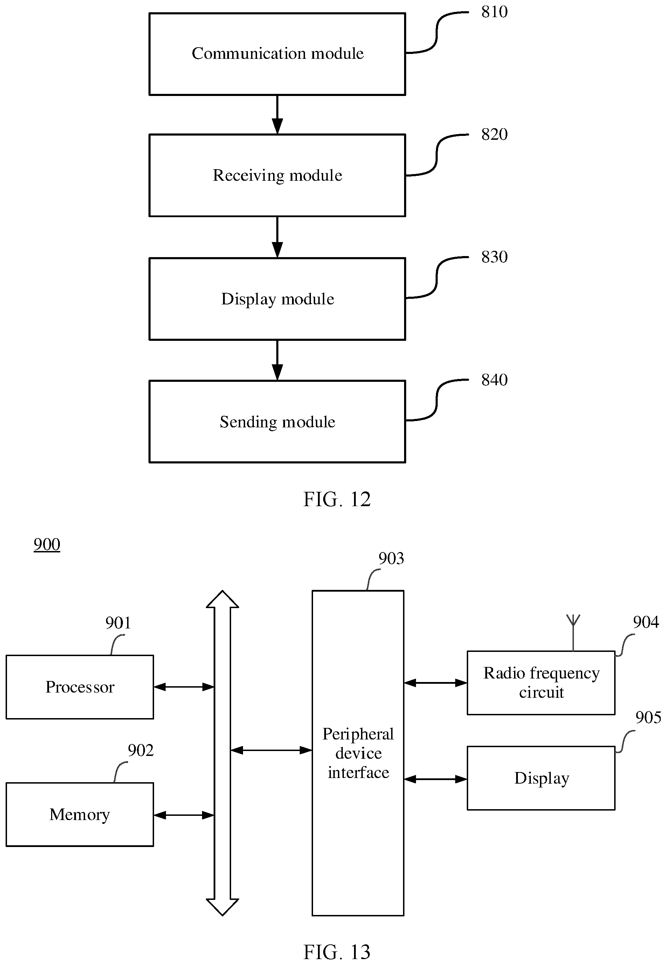

Based on a same technical concept, an embodiment of this application further provides an apparatus for performing function assistance on a vehicle-mounted terminal. As shown in FIG. 12, the apparatus includes:
a communication module 810, configured to establish a communication connection to a vehicle-mounted terminal; a receiving module 820, configured to receive a program upgrade message sent by a server; a display module 830, configured to display an upgrade option corresponding to the program; and a sending module 840, configured to: when it is detected that the upgrade option is triggered, send an upgrade package obtaining request corresponding to the program to the server, where the receiving module 820 is further configured to receive the upgrade package sent by the server; and the sending module 840 is further configured to send the upgrade package to the vehicle-mounted terminal.

In a possible implementation, the upgrade message carries a latest version identifier of the target program, and the sending module 840 is further configured to send an installed version identifier obtaining request corresponding to the target program to the vehicle-mounted terminal. The receiving module 820 is further configured to: receive an installed version identifier that is of the target program and that is sent by the vehicle-mounted terminal. The display module 830 is configured to: display, if the installed version identifier is different from the latest version identifier, the upgrade option corresponding to the target program.

In a possible implementation, the target program is firmware of the vehicle-mounted terminal.

In a possible implementation, the target program is a map application of the vehicle-mounted terminal.

In a possible implementation, the display module is further configured to display a plurality of vehicle control options. The sending module 840 is further configured to: when it is detected that a target vehicle control option in the plurality of vehicle control options is triggered, determine a vehicle control instruction corresponding to the target vehicle control option, and send the vehicle control instruction to the vehicle-mounted terminal.

In a possible implementation, the target vehicle control option is a braking function option, and the vehicle control instruction is a braking instruction.

In a possible implementation, the target vehicle control option is a vehicle diagnosis function option, and the vehicle control instruction is a vehicle diagnosis instruction.

The receiving module 820 is further configured to receive a vehicle diagnosis result message sent by the vehicle-mounted terminal.

In a possible implementation, the receiving module 820 is further configured to receive a data processing request sent by the vehicle-mounted terminal, where the data processing request carries to-be-processed data and a service type identifier.

The apparatus further includes a calculation module, and the calculation module is configured to process the to-be-processed data by using a service execution program corresponding to the service type identifier, to obtain output data. The sending module 840 is further configured to send the output data to the vehicle-mounted terminal.

In a possible implementation, the receiving module 820 is further configured to receive travel data sent by the vehicle-mounted terminal.

The apparatus further includes a storage module, and the storage module is configured to store the travel data. The sending module 840 is further configured to send the travel data to the server.

It should be noted that when the apparatus for performing function assistance on a vehicle-mounted terminal according to the foregoing embodiment performs function assistance on the vehicle-mounted terminal, division of the foregoing functional modules is merely used as an example for description. In actual application, the foregoing functions may be allocated to different functional modules for implementation based on a requirement. In other words, an internal structure of the mobile terminal is divided into different functional modules, to complete all or some of the functions described above. In addition, the apparatus for performing function assistance on a vehicle-mounted apparatus according to the foregoing embodiment shares a same concept as the embodiment of the method for performing function assistance on a vehicle-mounted terminal. For a specific implementation process of the apparatus for performing function assistance on a vehicle-mounted apparatus, refer to the method embodiment. Details are not described herein again.

A block diagram of a structure of a mobile terminal 900 is provided in an embodiment of this application. As shown in FIG. 13, the mobile terminal 900 may be a portable mobile terminal, for example, a smartphone, a tablet computer, or a notebook computer. The mobile terminal 900 may alternatively be referred to as user equipment, a portable terminal, or another name.

Generally, the mobile terminal 900 includes a processor 901 and a memory 902.

The processor 901 may include one or more processing cores, for example, a 4-core processor or an 8-core processor. The processor 901 may be implemented in at least one hardware form of a digital signal processor (Digital Signal Processor, DSP), a field-programmable gate array (Field-Programmable Gate Array, FPGA), or a programmable logic array (Programmable Logic Array, PLA). The processor 901 may alternatively include a main processor and a coprocessor. The main processor is a processor configured to process data in a wake-up state, and is also referred to as a central processing unit (Central Processing Unit, CPU). The coprocessor is a low-power-consumption processor configured to process data in a standby state. In some embodiments, the processor 901 may integrate a graphics processing unit (Graphics Processing Unit, GPU), and the GPU is configured to render and draw content that needs to be displayed on a display. In some embodiments, the processor 901 may further include an artificial intelligence (Artificial Intelligence, AI) processor, and the AI processor is configured to process a calculation operation related to machine learning.

The memory 902 may include one or more computer-readable storage media. The computer-readable storage medium may be in a non-transient state. The memory 902 may further include a high-speed random access memory and a non-volatile memory, for example, one or more magnetic disk storage devices or flash memory storage devices. In some embodiments, the non-transient computer-readable storage medium in the memory 902 is configured to store at least one instruction, and the at least one instruction is executed by the processor 901, to implement the method for performing function assistance on a vehicle-mounted terminal according to the method embodiment of this application.

In some embodiments, the mobile terminal 900 may optionally include a peripheral device interface 903 and at least one peripheral device. The processor 901, the memory 902, and the peripheral device interface 903 may be connected through a bus or a signal cable. Each peripheral device may be connected to the peripheral device interface 903 through a bus, a signal cable, or a circuit board. Specifically, the peripheral device includes a radio frequency circuit 904, a display 905, and the like.

The peripheral device interface 903 may be configured to connect at least one peripheral device related to input/output (Input/Output, I/O) to the processor 901 and the memory 902. In some embodiments, the processor 901, the memory 902, and the peripheral device interface 903 are integrated on a same chip or a same circuit board. In some other embodiments, any one or two of the processor 901, the memory 902, and the peripheral device interface 903 may be implemented on a separate chip or a separate circuit board. This is not limited in this embodiment.

The radio frequency circuit 904 is configured to receive and transmit a radio frequency (Radio Frequency, RF) signal, where the radio frequency signal is also referred to as an electromagnetic signal. The radio frequency circuit 904 communicates with a communication network and another communication device by using the electromagnetic signal. For example, the radio frequency circuit 904 may communicate with a vehicle-mounted terminal and a server. The radio frequency circuit 904 converts an electrical signal into an electromagnetic signal for sending, or converts a received electromagnetic signal into an electrical signal. Optionally, the radio frequency circuit 904 includes an antenna system, an RF transceiver, one or more amplifiers, a tuner, an oscillator, a digital signal processor, a codec chip set, a subscriber identity module card, and the like. The radio frequency circuit 904 may communicate with another terminal according to at least one wireless communication protocol. The wireless communication protocol includes but is not limited to: a worldwide web, a metropolitan area network, an intranet, mobile communication networks of generations (2G, 3G, 4G, and 5G), a wireless local area network and/or a Wi-Fi network, a Bluetooth protocol, or the like. In some embodiments, the radio frequency circuit 904 may further include a circuit related to near field communication (Near Field Communication, NFC). This is not limited in this application.

The display 905 is configured to display a user interface (User Interface, UI). The UI may include a graph, a text, an icon, a video, and any combination thereof. For example, the display 905 may display various interfaces, function options, and the like of the assistance application in this application. When the display 905 is a touch display, the display 905 further has a capability of collecting a touch signal on a surface or above a surface of the display 905. The touch signal may be input as a control signal into the processor 901 for processing. In this case, the display905 may be further configured to provide a virtual button and/or a virtual keyboard. The virtual button and/or the virtual keyboard is also referred to as a soft button and/or a soft keyboard. In some embodiments, there may be one display 905 that is disposed on a front panel of the mobile terminal 900. In some other embodiments, there may be at least two displays 905 that are respectively disposed on different surfaces of the mobile terminal 900 or are folded. In still some other embodiments, the display 905 may be a flexible display and is disposed on a curved surface or a folded surface of the mobile terminal 900. The display 905 may even be set to a non-rectangular irregular pattern, namely, a special-shaped screen. The display 905 may be a liquid crystal display (Liquid Crystal Display, LCD) or may be made of an organic light-emitting diode (Organic Light-Emitting Diode, OLED).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a device, all or some of the procedures or functions are generated according to embodiments of this application. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a device, or a data storage device, like a server or a data center, integrating one or more usable media. The usable medium may be a magnetic medium (for example, a floppy disk, a hard disk, and a magnetic tape), an optical medium (for example, a digital video disk (Digital Video Disk, DVD)), or a semiconductor medium (for example, a solid-state drive).

A person of ordinary skill in the art may understand that all or some steps for implementing the foregoing embodiments may be implemented by hardware or a program instructing related hardware. The program may be stored in a computer-readable storage medium. The storage medium mentioned above may include a read-only memory, a magnetic disk, or an optical disc.

The foregoing descriptions are merely an embodiment of this application, but are not intended to limit this application. Any modification, equivalent replacement, or improvement made without departing from the spirit and principle of this application shall fall within the protection scope of this application.

## Claims

1. A method for performing function assistance on a vehicle-mounted terminal, wherein the method is applied to a mobile terminal, and the method comprises:
displaying an upgrade option of a program of the vehicle-mounted terminal when the program is to be upgraded;
when it is detected that the upgrade option is triggered, sending, to a server, a request for obtaining an upgrade package of the program;
receiving the upgrade package sent by the server; and
sending the upgrade package to the vehicle-mounted terminal.

2. The method according to claim 1, wherein the method further comprises:
receiving, from the server, a latest version identifier and a program identifier that are of the program;
sending, to the vehicle-mounted terminal, a request for obtaining an installed version identifier of the program, wherein the request for obtaining the installed version identifier comprises the program identifier; and
receiving the installed version identifier of the program from the vehicle-mounted terminal, wherein
the displaying an upgrade option of a program of the vehicle-mounted terminal when the program is to be upgraded comprises:
displaying the upgrade option of the program when the installed version identifier is different from the latest version identifier.

3. The method according to claim 1, wherein the method further comprises:
receiving an upgrade message of the program from the server, wherein the upgrade message comprises a latest version identifier and a program identifier that are of the program;
sending a version detection message of the program to the vehicle-mounted terminal, wherein the version detection message of the program comprises the program identifier of the program and the latest version identifier of the program; and
receiving an upgrade request of the program from the vehicle-mounted terminal when an installed version identifier is different from the latest version identifier, wherein
the displaying an upgrade option of a program of the vehicle-mounted terminal when the program is to be upgraded comprises:
displaying the upgrade option of the program when the upgrade request of the program is received from the vehicle-mounted terminal.

4. The method according to claim 1, wherein the method further comprises:
receiving an upgrade message of the program from the server, wherein
the displaying an upgrade option of a program of the vehicle-mounted terminal when the program is to be upgraded comprises:
displaying the upgrade option of the program when the upgrade message of the program is received from the server.

5. The method according to any one of claims 1 to 4, wherein the program is firmware of the vehicle-mounted terminal.

6. The method according to any one of claims 1 to 4, wherein the program is a map application of the vehicle-mounted terminal.

7. The method according to any one of claims 1 to 6, wherein an assistance application is installed on the mobile terminal, and a vehicle on which the vehicle-mounted terminal is located is associated with the assistance application by registering with the server.

8. The method according to any one of claims 1 to 7, wherein when the mobile terminal is in a non-vehicle environment, the upgrade option is triggered, and the mobile terminal receives the upgrade package sent by the server; and when the mobile terminal is in a vehicle environment, the mobile terminal sends the upgrade package to the vehicle-mounted terminal through a communication connection between the mobile terminal and the vehicle-mounted terminal.

9. The method according to any one of claims 1 to 8, wherein the method further comprises:
establishing a communication connection to the vehicle-mounted terminal, wherein the communication connection comprises a wired connection or a wireless connection.

10. The method according to claim 9, wherein the communication connection is a wireless connection, there are a plurality of communication connections between the mobile terminal and the vehicle-mounted terminal, and the plurality of communication connections comprise a primary connection and a standby connection.

11. The method according to claim 10, wherein preset duration is used as a periodicity to determine the primary connection in the plurality of communication connections.

12. The method according to any one of claims 1 to 11, wherein the vehicle-mounted terminal is a first vehicle-mounted terminal, and when the vehicle-mounted terminal successfully performs authentication by using the server, the mobile terminal is used as a second vehicle-mounted terminal to assist the first vehicle-mounted terminal in implementing at least one of program upgrade, vehicle control, travel data transfer, and assistance calculation.

13. A method for performing function assistance on a vehicle-mounted terminal, wherein the method is applied to the vehicle-mounted terminal, and the method comprises:
receiving an obtaining request from a mobile terminal, wherein the obtaining request comprises a program identifier and is used to request an installed version identifier of a program indicated by the program identifier;
sending the installed version identifier of the program to the mobile terminal; and
receiving an upgrade package of the program from the mobile terminal, wherein a version identifier of the upgrade package of the program is different from the installed version identifier.

14. A method for performing function assistance on a vehicle-mounted terminal, wherein the method is applied to a vehicle-mounted terminal, and the method comprises:
receiving a version detection message of a program from a mobile terminal, wherein the version detection message comprises a program identifier of the program and a latest version identifier of the program;
sending an upgrade request of the program to the mobile terminal when an installed version identifier of the program is different from the latest version identifier; and
receiving an upgrade package of the program from the mobile terminal, wherein a version identifier of the upgrade package of the program is different from the installed version identifier.

15. The method according to claim 13 or 14, wherein the program is firmware of the vehicle-mounted terminal.

16. The method according to claim 13 or 14, wherein the program is a map application of the vehicle-mounted terminal.

17. The method according to any one of claims 13 to 16, wherein the method further comprises:
establishing a communication connection to the mobile terminal, wherein the communication connection comprises a wired connection or a wireless connection.

18. The method according to claim 17, wherein the communication connection is a wireless connection, there are a plurality of communication connections between the vehicle-mounted terminal and the mobile terminal, and the plurality of communication connections comprise a primary connection and a standby connection.

19. The method according to claim 18, wherein preset duration is used as a periodicity to determine the primary connection in the plurality of communication connections.

20. A method for performing function assistance on a vehicle-mounted terminal, wherein the method is applied to a server, and the method comprises:
obtaining an upgrade package of a program that is applied to the vehicle-mounted terminal and a latest version identifier of the program; and
sending the upgrade package of the program to the vehicle-mounted terminal by using a mobile terminal based on an upgrade package obtaining request received from the mobile terminal, wherein an installed version identifier of the program on the vehicle-mounted terminal is different from the latest version identifier.

21. The method according to claim 20, wherein the method further comprises:
sending, to the mobile terminal, a program identifier and the latest version identifier that are of the program, wherein the program identifier and the latest version identifier are used to determine, on the vehicle-mounted terminal or the mobile terminal, whether the installed version identifier of the program on the vehicle-mounted terminal is the same as the latest version identifier; and when the installed version identifier of the vehicle-mounted terminal is different from the latest version identifier, receiving the upgrade package obtaining request from the mobile terminal.

22. The method according to claim 20, wherein the server records the installed version identifier of the program installed on the vehicle-mounted terminal, the recorded installed version identifier is updated each time an upgrade success message for upgrading the program is received from the vehicle-mounted terminal, and the method further comprises:
determining, based on the recorded installed version identifier of the program and the obtained latest version identifier of the program, a vehicle identifier corresponding to the installed version identifier that is different from the latest version identifier; and
determining, based on the vehicle identifier, an assistance application account that is in a correspondence with the vehicle identifier, and sending an upgrade message of the program to the mobile terminal that logs in to the account.

23. A method for performing function assistance on a vehicle-mounted terminal, wherein the method is applied to a mobile terminal, and the method comprises:
displaying, by the mobile terminal, a plurality of vehicle control options; and
when detecting that a target vehicle control option in the plurality of vehicle control options is triggered, determining, by the mobile terminal, a vehicle control instruction corresponding to the target vehicle control option, and sending the vehicle control instruction to the vehicle-mounted terminal.

24. The method according to claim 23, wherein the target vehicle control option comprises a braking function option, and the vehicle control instruction comprises a braking instruction.

25. The method according to claim 23 or 24, wherein the target vehicle control option comprises a vehicle diagnosis function option, and the vehicle control instruction is a vehicle diagnosis instruction; and
the method further comprises:
receiving a vehicle diagnosis result message from the vehicle-mounted terminal.

26. The method according to any one of claims 23 to 25, wherein the method further comprises:
receiving a data processing request from the vehicle-mounted terminal, wherein the data processing request carries to-be-processed data and a service type identifier;
processing the to-be-processed data by using a service execution program corresponding to the service type identifier, to obtain output data; and
sending the output data to the vehicle-mounted terminal.

27. The method according to any one of claims 23 to 26, wherein the method further comprises:
receiving travel data from the vehicle-mounted terminal; and
storing the travel data.

28. The method according to claim 27, wherein the method further comprises:
sending the travel data to the server.

29. An apparatus for performing function assistance on a vehicle-mounted terminal, comprising a unit configured to perform the method according to any one of claims 1 to 28.

30. An apparatus for performing function assistance on a vehicle-mounted terminal, comprising a processor and a memory, wherein the memory is configured to store instructions, and when the instructions are loaded and executed by the processor, the method according to any one of claims 1 to 28 is performed.

31. An apparatus for performing function assistance on a vehicle-mounted terminal, located in a mobile terminal and comprising a processor and a communication interface, wherein the communication interface is configured to communicate with the vehicle-mounted terminal and a server, and the processor is configured to perform the method according to any one of claims 1 to 12 or claims 23 to 28.

32. An apparatus for performing function assistance on a vehicle-mounted terminal, located on the vehicle-mounted terminal and comprising a processor and a communication interface, wherein the communication interface is configured to communicate with a mobile terminal, and the processor is configured to perform the method according to any one of claims 13 to 19.

33. An apparatus for performing function assistance on a vehicle-mounted terminal, located in a server and comprising a processor and a communication interface, wherein the communication interface is configured to communicate with a mobile terminal, and the processor is configured to perform the method according to any one of claims 20 to 22.

34. A computer-readable storage medium, wherein the computer-readable storage medium stores instructions, and when the instructions are run by a processor, the method according to any one of claims 1 to 28 is performed.
